(19) **Europäisches Patentamt**

**European Patent Office**

**Office européen des brevets**

(11) **EP 0 884 510 B1**

(12) **EUROPEAN PATENT SPECIFICATION**

(45) Date of publication and mention
of the grant of the patent:
**06.11.2002 Bulletin 2002/45**

(51) Int Cl.[7]: **F16K 27/00**, G05D 7/06

(21) Application number: **98110365.8**

(22) Date of filing: **05.06.1998**

(54) **Discrete valve-throttle with a pulse control system**

Diskrete Ventildrosselvorrichtung mit Impulssteuerung

Dispositif d'étranglement discret d'une soupape avec système de commande par impulsions

(84) Designated Contracting States:
**DE FI FR GB IT NL SE**

(30) Priority: **10.06.1997 RU 97109696**

(43) Date of publication of application:
**16.12.1998 Bulletin 1998/51**

(73) Proprietors:
- **Galitsky, Jury Vasilevich**
  **Moskovskaya obl. 142296 (RU)**
- **Grachev, Veniamin Vasilevich**
  **103055 Moskau (RU)**
- **Gulienko, Anatoly Ivanovich**
  **140061 Moskovskaya obl. (RU)**
- **Shtalenkov, Valery Mikhailovich**
  **140061 Moskovskaya obl. (RU)**

(72) Inventors:
- **Galitsky, Jury Vasilevich**
  **Moskovskaya obl. 142296 (RU)**
- **Grachev, Veniamin Vasilevich**
  **103055 Moskau (RU)**
- **Gulienko, Anatoly Ivanovich**
  **140061 Moskovskaya obl. (RU)**
- **Shtalenkov, Valery Mikhailovich**
  **140061 Moskovskaya obl. (RU)**

(74) Representative: **Patentanwälte**
**Zellentin & Partner**
**Zweibrückenstrasse 15**
**80331 München (DE)**

(56) References cited:
| FR-A- 2 409 545 | RU-C- 2 037 178 |
| US-A- 3 746 041 | US-A- 4 019 533 |
| US-A- 4 207 919 | US-A- 4 244 396 |

**Description**

The invention relates to the machine-building industry and can be used in systems of the gas and liquid extraction and transportation, as well as the gas pumping, power and chemical plants.

A discrete device comprising a baffle separating the input and the output and provided with shut-off valves and electromagnetic control valves is known (US patent N2 4019533, N.Cl. 137/599, 1977). The drawbacks of this device are the high power consumption and the low reliability under an unstable operation of the electrical power network and in the absence of a pressure difference between the input and the output of the shut-off regulative device.

The most close to the filed invention is a discrete shut-off regulative device comprising a baffle with shut-off valves, disposed in the case and separating the input and output pipes, converters with an electrical input, and a control unit (Russian patent No 2037178, 1.Cl. G 05 D 7106, 1995). The drawbacks,of this device are the continuous gas escape into the atmosphere from the control units, the low reliability due to a great number of shut-off valves in the baffle, and the necessity to terminate the production process for executing the repair works during any failure of some units.

The above-mentioned drawbacks of known devices become most apparent during their use in production processes with an uninterrupted work cycle, where the operation reliability and the ecological characteristics of shut-off regulators are the crucial factors, especially in the events of any component failure. In this case a possibility to continue the production process with deteriorated characteristics must be provided, and repair works must be performed without dismounting those devices from the object.

A technical outcome achieved by the invention is in increasing the reliability of the production processes using shut-off control valves, and in improving their ecological and operational characteristics, e.g. failureproofness and maintainability.

The mentioned outcome is achieved by that in a discrete valve-throttle with a pulse control system, which valve-throttle comprises a baffle disposed in a case and separating the input and output pipes, supply and disposal manifolds of a working medium, shut-off elements, converters, and a control unit, the baffle is connected to the case by cylindrical hollow rods, shut-off elements comprise an orifice plate, a control cavity, and a two-position piston spring-loaded for the closing and movable in a sleeve disposed inside the rods, the converters are made in the form of a three-passage body which input of the working medium is connected to the supply manifold, the first output is connected to the control cavity, and the second output is connected to the disposal manifold, the converters include a two-position electromechanical drive provided with edge indicators, an electrical input of the drive is connected to the output of the control unit, electrical outputs of indicators are connected to second inputs of the control unit, and the control unit itself is provided with a first input of an outside control signal and with a pulse shaper.

Preferably, the mentioned outcome is also achieved by that two two-position three-passage valves and a back valve are mounted in the valve-throttle, an input of the first three-passage valve being connected to the input of the supply manifold, its first output being connected to a source of the working medium, and its second output being connected to the disposal manifold, an input of the second three-passage valve being connected to the disposal manifold, its first output being connected to an output pipe and its second output being connected to an input of the back valve, which output is connected to the disposal pipeline, also two-position valves corresponding to the number of converters are mounted in the discrete valve-throttle, which input being connected to the first output of the converter and an output being connected to the input of the control cavity.

Preferably, the mentioned outcome is also achieved by that the converters are provided with two-position manual mechanical input, and the control unit is provided with electric control elements having an electrical input connected to an electrical power source and an output connected to the outputs of the control unit.

Preferably, the mentioned outcome is also achieved by that the number of converters is placed into correspondence with a passage section areas of the orifice plates, and values of areas from the first to the penultimate inclusive differ from each other by a factor of two, and the last area value is equal to the value of the penultimate one, the last and penultimate areas are both implemented in two shut-off elements integrated by a common converter.

Fig. 1     shows the diagram of the discrete valve-throttle with a pulse control system and its communications; and

Fig. 2     shows the relationship between the value of the passage section area and the electrical control signal.

A discrete valve-throttle (DVT) with a pulse control system comprises a baffle 7 connected to a case 2 by cylindrical hollow rods 3 and separating an input tube 1 and an output tube 9, a supply manifold 21 of the working medium and a disposal manifold 12 of the working medium. The rods 3 ensure the system stiffness and prevent the transmission of strains from the case 2 and the baffle 7 to the shut-off elements which are placed inside the rods and provided with an orifice plate 8, a control cavity 35 and a two-position piston 6 spring-loaded for closing movable in a sleeve 4. Converters 30 have a two-position three-passage element 16 (a sphere or a valve) which working medium input is connected to the supply manifold 21, the first output is connected to the control cavity 35, and the second output is connected to the disposal manifold 12, and an electromechanical drive 18 with edge indicators, an electrical input 15 of the drive 18 is connected to an output 23 of a control unit 29 and electrical outputs 19 and 20 of the indicators are connected to second inputs 27 of the control unit 29; the converters 30 are also provided with a two-position manual mechanical input 17 operating without electrical power supply. The control unit 29 is provided with a first input 26 of an outside signal converted by a coding unit 25 into a control code corresponding to a number of the converters 30, the code shows what position, OPEN or CLOSE, should be taken by pistons 6 to ensure the required section area of the DVT. The code enters a first input of a pulse shaper 24 and comes to the electrical input 15 of the drive 18 from an output 23 of the pulse shaper 24. The pulse supplying is terminated by the pulse shaper after receiving a signal from the electric outputs 19 and 20 of edge indicators, e.g. sealed-contact reed relays, of the drive 18, and in this case the outputs 19 and 20 indicate OPEN or CLOSE state of the converter element 16. The control unit 29 is provided with elements of manual remote electrical control 22, an electrical input of which is connected to an electrical power source 28 and an output is connected to the outputs 23 of the control unit 29.

The implementation of two-position concept in the shut-off elements and converters causes the moving mechanical members to be in a free state for only a short term in transient modes, and the rest of time they are kept pressed against stops and have excessive re-position force when moving from them. Therefore, after processing the finite number of control pulses the DVT transforms into a throttling orifice plate. This results in increasing the system reliability because it is possible to continue the production process while failure situation appearing in DVT components. Control elements 21 and 17 allow to control manually the production processes in failures, that also enhances the reliability.

The DVT also comprises a two-position three-passage valve 32 for supplying the working medium, which input is connected to an input of the supply manifold 21, its first output is connected to the working medium source, and its second output is connected to the disposal manifold 12 of the working medium; and a two-position three-passage valve 11, which input is connected to the disposal manifold 12, its first output is connected to the output tube 9, and its second output is connected to an input of a back valve 13 which output is connected to a disposal pipeline 14. Also, two-position valves 10 in correspondence with a number of converters 30 are mounted, which input is connected to the first output of converter 30, and an output is connected to the input of the control cavity 35. A line between the valve 32 and the manifold 21 can be equipped with a filter 31. A medium flowing through the DVT can be used as a working medium for the converters 30, in this case a pipeline 33 can be connected to the input tube 1, or the pipeline 33 is connected to an outside source of the working medium having pressure not less than pressure at the DVT input.

The valves 10, 11 and 32 are technological ones. They ensure the operation and the repair works in any failure. In this case, the repair works related to the replacement of the shut-off elements are performed without dismounting of the DVT case from the pipeline; and the repair works on the control unit and converters can be performed without termination of the production process.

An improvement of the DVT ecological characteristics is achieved by disposing the working medium from the disposal manifold 12 into the output tube 9. In cases of utilizing the DVT with a small value of pressure drop the disposal is performed through the pipeline 14 into the atmosphere, for which purpose the input of the valve 11 is connected to its second output, and the back valve 13 ensures the operation safety. The mounting of the valve 13 prevents the atmosphere air from getting into the disposal manifold 12 and the control cavity 35, and from its mixing with the working medium there.

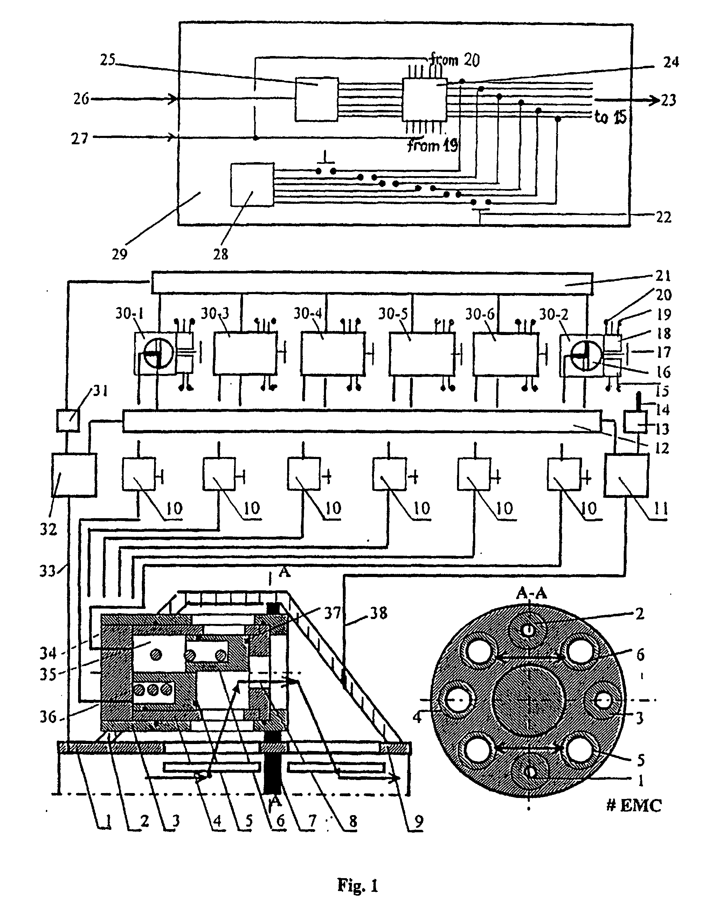

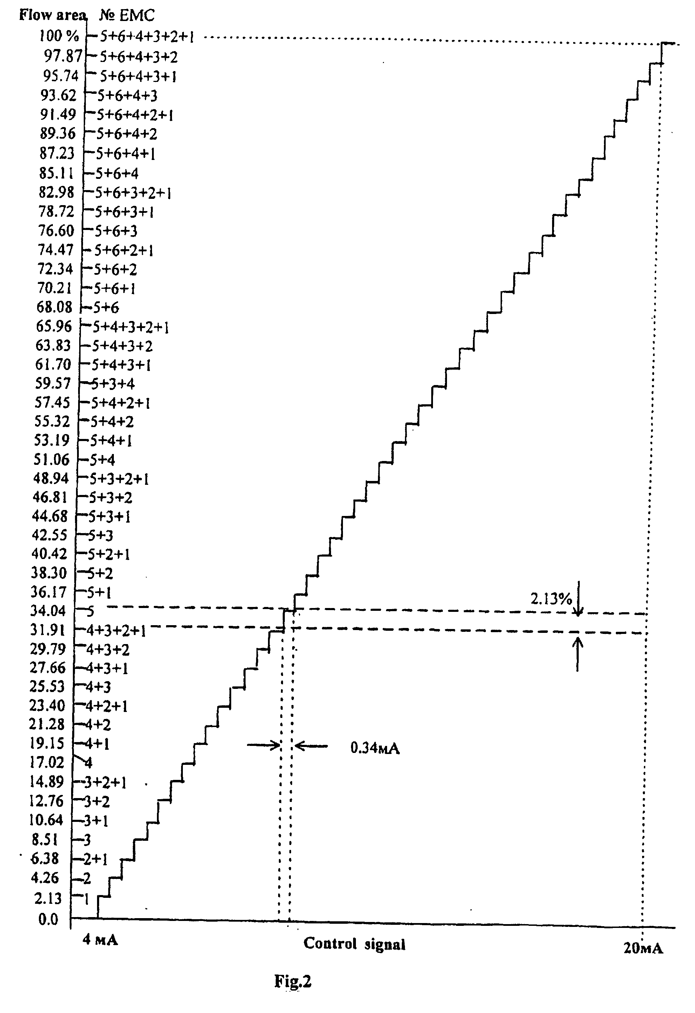

A multi-flow scheme is implemented in the discrete valve-throttle, and the flow in the input tube 1 before the baffle 7 being divided into several flows each having the mounted shut-off element with an orifice plate of a certain diameter (see Fig. 1, the sectional view A-A of orifice plates). Separate flows join together in the output tube 9. Throttle characteristic of the DVT has a discrete (step-by-step) character (Fig. 2) and shows the relationship between the input electrical (or other) control signal and the value of the passage section area, which relationship is implemented by the turning on a certain combination of converters (their numbers are given along the ordinate axis) and, consequently, a combination of orifice plates. The number of converters should be minimum for increasing the reliability.

As it is known, if M numbers correspond to M objects characterized by real numbers, then the latter form a numerical sequence, and if the law of sequence construction is determined, allowing to prolong it to infinity, then such sequences are discrete.

For the DVT the M number of converters is placed into the correspondence with the passage section area of orifice plates Fj, which values form a discrete non-decreasing numerical sequence:

$$\{Fj) = \{F1, F2, F3.... Fm), \ j = 1, 2, 3... M. \tag{1}$$

After dividing each member of the sequence (1) by the first member (the area value Fmin of the orifice plate with the minimum diameter) an integer numerical sequence {Zj} will be obtained characterizing a functional relationship between areas of orifice plates for providing the necessary discreteness:

$$\{Zj\} = \{Z1,Z2,Z3...,Zm\}, \; j = 1,2,3... \; M. \tag{2}$$

The value of the first member of the functional sequence (2) is constantly equal to 1, and to obtain the equally-stepped throttle characteristic relatively to the passage section area the value of each subsequent member should be not less than the previous member value and not greater than the sum of all preceding members increased by 1. A control instruction executed by the proper converter and the shut-off element corresponds to each member of the sequence.

The sum of all members, from first to last (M) of the functional sequence $\{Zj\}$ is equal to the number of discrete positions N:

$$Z1 + Z2 +...+ Zm=(F1/Fmin + F2/Fmin +...+ Fm/Fmin) = Fmax/Fmin = N, \tag{3}$$

where Fmax is the sum value of the area of orifice plates.

As it is obvious from the expression (3), the following expressions are true for the calculations of the values of passage section areas of orifice plates:

$$F1 = Fmax * Z1/N, \; F2 = Fmax * Z2/N, \; ... \; , \; Fm = Fmax * Zm/N \tag{4}$$

After dividing Fj by Fmax in the expression (4), a numerical sequence $\{Dj\}$ will be obtained, which members are equal to the ratio of a member value of the sequence $\{Zj\}$ to the number of discrete levels, and these members characterize the proportion of every passage section area of the orifice plate in the total area of the passage section of the valve-throttle.

$$\{Dj\} = \{Z1/N, \; Z2/N,..., \; Zm/N\}, \; j = 1, \; 2, \; 3 \; ... \; M. \tag{5}$$

While using the sequence (5) for the analysis of the DVT failureproofness, its sequence members indicate the degradation of the throttle characteristic because they show a portion of the total area excluded from the control in the event of any failure; therefore, it is worthwhile to name them as sequences of failureproofness with coefficients of the section area degradation.

Generally, the realization of the required discreteness by the passage section area is performed by utilizing the functional dependence of the digital binary code, in which dependence the section areas of orifice plates are distinguished from one another by a factor of two. The corresponding functional sequence $\{Zj\}$ for six members providing 63 discrete positions, and the failureproofness sequence $\{Dj\}$, where degradation coefficient values are calculated in %, are as follows:

$$\{Zi\} = \{ \; 1, \; 2, \; 4, \; 8, \; 16, \; 32 \; \}, \tag{6a}$$

$$\{Dj\} = \{1.59, \; 3.17, \; 6.35, \; 12.70, \; 25.40, \; 50.79\}, \tag{6b}$$

As the sequences $\{Zj\}$ are non-decreasing, their degradation coefficient values increase when the number of the sequence member is increasing. This value is maximum in the case of the failure of DVT components corresponding to the last member, and when using the binary code, the degradation coefficient value is approximately 51%, i.e. 51% of area is excluded from the control in the case of the failure.

The decrease of the maximum degradation coefficient value will appear while utilizing the numerical sequences based on the members' iteration, i.e. groups of sections have the same areas. For example:

$$\{Zj\} = \{ \; 1, \; 1, \; 1, \; 1, \; 5, \; 5, \; 5, \; 5 \; \}, \tag{7a}$$

$$\{Dj\} = (4.17, \; 4.17, \; 4.17, \; 4.17, \; 20.8, \; 20.8, \; 20.8, \; 20.8), \tag{7b}$$

The sequence (7a) provides more than twice decrease in the maximum value of the degradation coefficient, however, it realizes only 24 discrete levels of the throttle characteristic. To compensate the N decrease it is necessary to increase the number of members (number of converters and shut-off elements), but this decreases the reliability.

A positive feature of the binary code sequence to provide the fast growth of the number of discrete levels (that is a geometric progression with a.denominator equal to 2), and a positive feature of the sequence with the members iteration to decrease degradation coefficient values will be realized in mixed numerical sequences based on the binary code and the iteration of two last members. The expressions for the six members of the mixed sequence are as follows:

$$(Zj\} = (1, 2, 4, 8, 16, 16\}, \tag{8a}$$

$$\{Dj\} = \{2.13, 4.26, 8.51, 17.02, 34.04, 34.04\}. \tag{8b}$$

The change-over to the mixed sequences with the iteration of two last members provides the decrease in the maximum value of the degradation coefficient by 17% in comparison with the binary code, and a number of discrete positions N is slightly decreased, while the number of members is equal to 47 instead of 63 for the binary code.

The further decrease in degradation coefficient values is possible by partitioning the flow into two flows corresponding to the maximum values of degradation coefficients. Only one control instruction remains, and after entering it the converter and the shut-off element in each flow operate, and in the case of their failure only half of area is excluded from control. The corresponding values of degradation coefficients decrease by half, however, while failures in control instruction forming units the degradation coefficient value is not changed. In this case the sequences of the failureproofness will be different for failures of the shut-off elements and control units.

Sectional view of orifice plates on the Fig. 1 shows the realization of six-members mixed functional sequence based on the binary code, iteration of two last members and partitioning the flows for them. Taking into account, that the DVT may function for a long time with the fixed position of the shut-off elements when valves 10 are closed, and, at the same time, the repair works are admissible on the converters and control units, it is advisable to use one converter for the control of the shut-off elements in two separate flows (converters 30-5 and 30-6 on the Fig. 1). In this case two sequences of the failureproofness will be obtained: {Dj-S} for shut-off element failures and {Dj-C} for failures of the converters and control units.

$$\{Zj\} = \{1, 2, 4, 8. 16, 16 \}$$

$$\{Dj\text{-}S\} = \{2.13, 4.26, 8.51, 17.02, 17.02, 17.02, 17.02, 17.02\},$$

$$\{Dj\text{-}C\} = (2.13, 4.26, 8.51, 17.02, 34.04, 34.04\}.$$

The performed analysis shows that while utilizing the mixed functional sequences based on the binary code, iteration of two last members and separation of corresponding flows into two flows with the common control, i.e. when the passage section area of orifice plates is placed into correspondence with the number of converters, which area values from first to the penultimate inclusively differ from one another by a factor of two, the last value is equal to the penultimate, and both the last and the penultimate areas being realized in two shut-off elements united by the one converter, then a continuation of the production process is provided keeping more than 82% of the passage section area in failures of shut-off elements and more than 65% in failures of the control units and converters. This increases the reliability of the device operation because it is not necessary to stop the production process in a moment and the maintenance personnel has a time for making a correct decision.

The DVT is functioning in the following manner. The valves 10 in the initial state are open and connect the control cavities 35 to the first output of the converters 30. The valve 32 provides the working medium supply from the input tube 1 through the pipeline 33 to the manifold 21, for which purpose the first output of the valve 32 is connected to the pipeline 33. The valve 11 provides the disposal of the working medium to the output tube 9, for which purpose its first output is connected to the pipeline 38. The control signal is absent, and all pistons 6 of the shut-off elements close the orifice plate sections (see the upper position of the piston 6 in the Fig. 1), for which purpose the correspondent converter 30 provides the connection of its input with the first output, and consequently, with the control cavity 35. The piston 6 occupies extremely right position under the effect of the force of a spring 36 and the working medium pressure on the piston. The end face of the piston 6 in the closed state closes the aperture in the orifice plate 8 along a sealing ring 5 which diameter is less than an outer diameter of the piston 6. The difference between these diameters forms an unbalanced area 37, which value produces the force for opening the piston 6.

When the control signal is supplied to the input 26 of the control unit 29, this signal is converted in the coding device 25 and then in the shaper 24 into pulses of predetermined duration and polarity, "+" polarity corresponding to the converter operation for opening the section of the orifice plate 8 by the piston 6, and "?" polarity for its closing. When $l_{in}$ = 4 mA, "+" polarity pulses are supplied only to the electrical input 15 of the converter 30-1. In this case its drive 18 moves from its one stop to another, and the three-passage element 16 connects its input to the second output provided the working medium disposal from the control cavity 35. The piston 6 moves to extremely left position up to the stop 34 under the effect of the pressure drop onto the unbalanced area 37 of the piston 6 (see the lower position of piston 6 on the Fig. 1). In so doing, the orifice plate 8 is opened, and the working medium flows from the DVT input to its output. When the drive 18 finishes its moving, the edge indicator comes into the action, and a signal from its output 19 is supplied to the second input 27 of the control unit 29 and further to the shaper 24 for termination of pulse supplying.

While the signal $l_{in}$ increasing up to 4.35 mA according to the Fig. 2, the converter 25 and the shaper 24 form pulses with "+" polarity in response to the converter 30-2 turnon and with "?" polarity in response to the converter 30-1 turn-off. The passage section area of the DVT increases up to 4.26 %. Further increase in $l_{in}$ leads to opening the DVT section in accordance with the throttle characteristic shown in Fig. 2.

If necessary, the manual remote electrical control of the position of elements 16 is possible by connecting for the short time the electrical input 15 of the drive 18 directly to the power source 28 by means of elements 22. The mechanical input 17 provides a direct manual change of the state of the elements 16 of the converters 30 in the absence of the electric power.

In order to execute the repair works, the valve 32 is changed over to a disposal state, for which purpose its input and consequently the working medium supply manifold 21 is connected to the disposal manifold 12. The valve 11 is changed over from the position of the working medium disposal to the pipe 9 to the position of the disposal to the pipeline 14 with the subsequent disposal through the back valve 13 to the atmosphere. Since the valves 10 are open, after the mentioned connection of the valves 11 and 32 for disposal, the working medium is released from the converters 30 and the control cavities 35 to the atmosphere. After disposing the working medium from the pipes 1 and 9 and removing the stop 34 it is possible to carry out the repair works on the shut-off elements, i.e. to replace the sealing 5, the orifice plate 8, etc. without dismounting the case 2 from the pipeline. If all valves 10 are closed during the operation of the DVT, then the pressure shut-off will appear in the control cavities 35, and the DVT will operate with the fixed position of the shut-off element pistons 6. In this case, after changing over the valves 11 and 32 to the disposal position, the working medium from the manifolds 12, 21 and converter cavities will be released to the atmosphere, and repair or maintenance works on the converter units, electrical communications, etc. will become possible.

Thus, utilizing in the claimed device the rods to connect the case to the baffle, two-position shut-off elements and converters, the pulse control unit, and also choosing the functional relationship between the orifice plate areas that reduces the number of converters and increases the failureproofness, it is possible to increase the reliability of the discrete valve-throttle. The disposal valve and the back valve improve the ecological characteristics of the discrete valve-throttle. The presence of the technological valves in the DVT allows to carry out the repair works without dismounting the DVT from the pipeline, and to execute them without termination of the production process while failures in the components of the control unit and converter occur.

**Claims**

1.  A discrete valve-throttle with a pulse control system, which valve-throttle comprises a baffle (7) disposed in a case (2) and separating input and output pipes (1,9), supply and disposal manifolds (21,12) of a working medium, shut-off elements, converters (30), and a control unit (29), **characterized in that** the baffle (7) being connected to the case (2) by cylindrical hollow rods (3), the shut-off elements comprising an orifice plate (8), a control cavity (35), and a two-position piston (6) spring-loaded for the closing and movable in a sleeve (4) disposed inside the rods, the converters (30) being made in the form of a three-passage body (16) which input of the working medium is connected to the supply manifold (21), the first output is connected to the control cavity (35), and the second output is connected to the disposal manifold (12), the converters (30) including a two-position electromechanical drive (18) provided with edge indicators, an electrical input (15) of the drive is connected to the output (23) of the control unit (29), electrical outputs (19,20) of the indicators are connected to second inputs (27) of the control unit (29), and the control unit (29) itself being provided with a first input (26) of an outside control signal and with a pulse shape (24).

2.  Device of claim 1, **characterized in that** two two-position three-passage valves (32) and a back valve (13) being mounted in the valve-throttle, an input of the first three-passage valve being connected to the input of the supply manifold, its first output being connected to a source of the working medium, and its second output being connected to the disposal manifold, an input of the second three-passage valve being connected to the disposal manifold, its first output being connected to an output pipe and its second output being connected to an input of the back valve, which output is connected to the disposal pipeline, also two-position valves (10) corresponding to the number of converters are mounted in the discrete valve throttle, which input being connected to the first output of the converter and an output being connected to the input of the control cavity.

3. Device of claim 1, **characterized in that** the converters are provided with a two-position manual mechanical input (17), and the control unit is provided with electric control elements having an electrical input connected to an electrical power source and an output connected to the outputs of the control unit.

4. Device of claim 1, **characterized in that** the number of converters is placed into correspondence with a passage section areas of the orifice plates, and values of areas from the first to the penultimate inclusive differ from each other by a factor of two, and the last area value is equal to the value of the penultimate one, the last and penultimate areas being both implemented in two shut-off elements integrated by a common converter.

**Patentansprüche**

1. Diskrete Ventildrossel mit einem Impulssteuersystem, enthaltend eine in einem Gehäuse untergebrachte und Eingangs- und Ausgangsstutzen trennende Scheidewand, Zu- und Verwertungsleitungen für Arbeitsmedium, Absperrorgane, Wandler und eine Steuereinheit, **dadurch gekennzeichnet, daß** die Scheidewand mit dem Gehäuse durch zylindrische Hohlstangen verbunden ist, die Absperrorgane eine Meßblende, einen Steuerraum und einen auf Schließen federbelasteten und in einer innerhalb der Hohlstange befindlichen Hülse bewegbaren Zweipunktkolben umfassen, die Wandler als ein Dreidurchgangsorgan, bei dem der Arbeitsmediumeingang mit der Zuleitung, der erste Ausgang mit dem Steuerraum und der zweite Ausgang mit der Verwertungsleitung verbunden ist, ausgeführt sind und einen mit Endsignalgebern versehenen elektromechanischen Zweipunktantrieb aufweisen, dessen elektrischer Eingang mit dem Ausgang der Steuereinheit gekoppelt ist, während der elektrische Ausgang der Signalgeber mit den zweiten Eingängen der Steuereinheit gekoppelt ist und die Steuereinheit selbst mit einem ersten Eingang des Außensteuersignals und einem Impulsformer versehen ist.

2. Vorrichtung nach Anspruch 1, **dadurch gekennzeichnet, daß** in der Ventildrossel zwei Zweipunkt-Dreidurchgangsventile und ein Rückschlagventil eingebaut sind, wobei der Eingang des ersten Dreidurchgangsventils mit dem Eingang der Zuleitung, sein erster Ausgang mit der Arbeitsmediumsquelle und sein zweiter Ausgang mit der Verwertungsleitung verbunden ist, und der Eingang des zweiten Dreidurchgangsventils mit der Verwertungsleitung, sein erster Ausgang mit dem Ausgangsstutzen und sein zweiter Ausgang mit dem Eingang des Rückschlagventils verbunden ist, dessen Ausgang mit der Verwertungsleitung verbunden ist, wobei auch nach der Anzahl der Wandler Zweipunktventile vorgesehen sind, deren Eingang mit dem ersten Ausgang des Wandlers und deren Ausgang mit dem Eingang des Steuerraums verbunden ist.

3. Vorrichtung nach Anspruch 1, **dadurch gekennzeichnet, daß** die Wandler mit einem handbetätigten mechanischen Zweipunkt-Eingang versehen sind und die Steuereinheit mit elektrischen Steuerorganen versehen ist, deren elektrischer Eingang mit der Stromspeisequelle und deren Ausgang mit den Ausgängen der Steuereinheit gekoppelt ist.

4. Vorrichtung nach Anspruch 1, **dadurch gekennzeichnet, daß** der Anzahl der Wandler die Flächen der Durchgangsquerschnitte der Meßblenden zugeordnet werden, deren Werte sich von der ersten bis zur vorletzten einschließlich um ein Zweifaches unterscheiden, und der Wert der letzten Fläche dem Wert der vorletzten gleich ist, wobei die letzte und die vorletzte Fläche jeweils in zwei durch einen gemeinsamen Wandler vereinigten Absperrorganen realisiert wird.

**Revendications**

1. Etrangleur discret à système de commande impulsionnel comprenant

   - une cloison, située dans le corps et séparant des tubulures d'entrée et de sortie,

- des collecteurs d'arrivée et de récupération du fluide de fonctionnement,
- des organes de fermeture,
- des convertisseurs et
- un bloc de commande

**caractérisé en ce que** la cloison est reliée au corps par des tendeurs creux cylindriques; les organes de ferméture comprennent une rondelle de dosage, une cavité de commande et un piston à deux positions qui fait ressort à la ferméture et coulisse dans une chemise située à l'intérieur du tendeur; les convertisseurs sont exécutés comme un organe à trois passages dont l'entrée du fluide de fonctionnement est liée au collecteur d'arrivée, la première sortié est liée à la cavité de commande, la deuxième sortie est liée au collecteur de récupération, et comprennent une commande électromécanique à deux positions avec des avertisseurs d'extrémité dont l'entrée électrique est connectée à la sortie du bloc de commande et la sortie électrique des avertisseurs est connectée aux deuxièmes entrées dudit bloc, le bloc de commande lui même possède la première entrée du signal de commande extérieur et un formateur d'impulsions.

2. Dispositif selon la revendication 1, **caractérisé en ce qu'**il comprend

- deux soupapes à deux positions à trois passages et une soupape de retenue, l'entrée de la première soupape à trois passages étant liée à l'entrée du collecteur d'arrivée, sa première sortie étant liée à la source du fluide de fonctionnement et la deuxième sortie étant liée au collecteur de récupération du fluide de fonctionnement; l'entrée de la deuxième soupape à trois passages étant liée au collecteur de récupération, sa première sortie étant liée au tubulure de sortie et sa deuxième sortie étant liée à l'entrée de la soupape de retenue dont la sortie étant liée à la conduite de récupération;
- et des soupapes à deux positions mises en conformité avec le nombre de convertisseurs, l'entrée desquelles est liée à la première sortie du convertisseur et la sortie est liée à l'entrée de la cavité de commande.

3. Dispositif selon la revendication 1, **caractérisé en ce que** les convertisseurs sont pourvus d'une entrée mécanique manuelle à deux positions et le bloc de commande est pourvu des organes de la commande électrique, dont l'entrée électrique est connectée à la source de courant et la sortie est connectée aux sorties du bloc de commande.

4. Dispositif selon la revendication 1, **caractérisé en ce que** l'on met en conformité le nombre de convertisseurs et les surfaces de sections de passage des rondelles de dosage dont les valeurs dès la première juqua'à l'avant-dernière inclusivement se distinguent l'une de l'autre de deux fois, et la valeur de la dernière surface est égale à la valeur de l'avant-dernière, chacune d'elles se réalisant en deux organes de ferméture, réunis par un seul con-vertisseur.

Fig. 1

**Fig.2**